# EUROPEAN PATENT SPECIFICATION

(11) **EP 0 853 546 B1**
(45) Date of publication and mention of the grant of the patent: **04.12.2002**
(21) Application number: 96914598.6
(22) Date of filing: 20.05.1996
(51) Int. Cl.: B29C 65/04, H01R 13/56

(54) **SEALED BOOT ON AN ELECTRICAL CABLE**
VERSCHWEISSTE KAPPE AN EINEM ELEKTRISCHEN KABEL
MANCHON SCELLE SUR UN CABLE ELECTRIQUE

(30) Priority: 15.06.1995 US 249 P; 16.01.1996 US 586570
(43) Date of publication of application: 22.07.1998
(73) Proprietor: THE WHITAKER CORPORATION, Wilmington, Delaware 19808 (US)
(72) Inventor: MCINTIRE, James, Francis, West Linn, OR 97068 (US); STOPPER, Larry, Duane, Cornelius, OR 97113 (US); BECKMAN, Robert, Lee, Beaverton, OR 97006 (US); VANCE, Dan, Alan, Portland, OR 97219 (US); SMITH, Daniel, B., Beaverton, OR 97007 (US); BARNEY, Bruce, Alan, Portland, OR 97216 (US)
(74) Representative: Warren, Keith Stanley
(86) International application number: US9606525
(87) International publication number: WO97000165

(56) References cited:
- DE-C- 3 911 611
- FR-A- 1 203 161
- GB-A- 885 820
- US-A- 3 558 397
- US-A- 4 210 479
- US-A- 4 251 310
- US-A- 4 276 108
- US-A- 4 461 529
- US-A- 4 954 678
- US-A- 5 030 135
- PATENT ABSTRACTS OF JAPAN vol. 010, no. 092 (M-468), 9 April 1986 & JP 60 230829 A (KUINRAITO DENSHI SEIKOU KK;OTHERS: 01), 16 November 1985,

## Description

The invention relates to a sealed boot on an electrical cable, and, more particularly, to an electrical cable assembly in which a tubular boot is sealed to a tubular jacket on an electrical cable.

An electrical cable used in surgery is constructed with a desired number of electrical conductors to adapt the cable for operation with a variety of surgical devices, such as surgical saws, drills and instrumentation probes. A flexible and tapered boot concentrically surrounds the cable. The boot undergoes flexure together with the cable, thus, to spread stresses that are caused to occur in the cable by flexure. An annular seal between the boot and an outer jacket of the cable is desired. The cable may become contaminated, for example, when exposed to patient bodily fluids. It is desirable to disinfect the cable for reuse. The cable must be sealed well enough to prevent seepage of disinfectants and sterilizing fluids into the cable.

According to U.S. Patent 4,954,678, an annular seal between a catheter and a ballon is provided by melting and fusion of the catheter and ballon where they concentrically overlap each other. Melting results from a radio frequency, RF, field that is applied to the catheter and ballon where they concentrically overlap. For example, an outer electrode concentrically surrounds the catheter and ballon where they overlap. Another electrode in the form of a mandrel is positioned inside the catheter and ballon where they overlap. The RF field is generated between the electrodes. Subsequently, the mandrel is removed, leaving the catheter and ballon empty.

Because the catheter and ballon are empty, the mandrel is easily positioned, first, inside them, and then removed. However, when it is desired to form an annular seal between a boot and a tubular jacket on an electrical cable, the contents and construction of the electrical cable provide a barrier to placement of an internal mandrel. The electrical cable remains inside the boot after the seal is formed. At least one insulated conductor is inside a hollow shield conductor of the cable. A seal must extend around an entire circumference between the boot and the jacket on the electrical cable to prevent seepage of disinfectants and sterilizing fluids.

According to the invention, a concentric seal is provided between a plastic boot and a plastic jacket on an electrical cable, the seal being formed without an internal mandrel. The jacket concentrically surrounds a hollow conducting shield conductor, with at least one insulated conductor being inside the hollow shield conductor. According to an embodiment, an electrically conducting welding electrode on the shield conductor projects beyond an end of the boot for use in formation of the seal. Advantageously, a concentric portion of the conducting shield at a site of the seal becomes part of a welding electrode used in the formation of the seal. The seal is formed without an internal mandrel.

Advantageously, the welding electrode, according to one embodiment, comprises the hollow shield conductor itself.

Advantageously, the welding electrode, according to another embodiment, comprises, another shield conductor connected by electrical connectors to the hollow shield conductor on the electrical cable.

Further advantageously, according to another embodiment, a portion of another welding electrode concentrically encircles the seal, and another portion of said another welding electrode projects beyond an end of the boot for use in formation of the seal.

Further according to the invention, a method of sealing between a boot and a jacket on an electrical cable that extends concentrically through the boot comprises the steps of, generating an RF field between a first welding electrode and a second welding electrode on a hollow shield conductor of the electrical cable, and forming an annular seal between the boot and the jacket by generating the RF field.

Embodiments of the invention will now be described by way of example with reference to the accompanying drawings, according to which:
Figure 1 is a side view partially in section of an end portion of a multi-conductor electrical cable including a strain-relief boot attached to a jacket of the cable;
Figure 2 is an exploded isometric view of an RF welding fixture, and a cable according to Figure 1;
Figure 3 is a section view of a portion of the welding fixture and cable as shown in Figure 2;
Figure 4 is a view of a portion of the RF welding fixture shown in Figure 2, showing the manner of fastening a flexible strain relief boot that is integral with a connector cover to a cable to which an electrical connector has already been attached;
Figure 5 is a view similar to Figure 3, showing the attachment of a flexible strain relief boot to a jacket of a cable by the use of a heat-activated adhesive material;
Figure 6 is an isometric view of a flexible strain relief boot including an embedded electrode; and
Figure 7 is a section view of a portion of a cable and the flexible strain relief boot as shown in Figure 6.

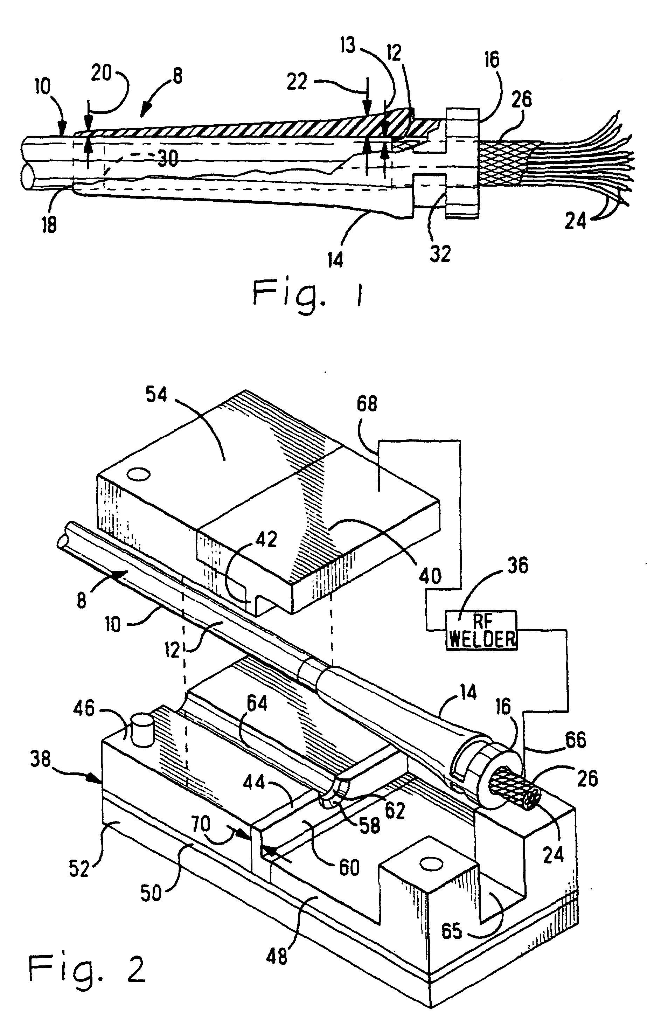

Referring now to Figure 1, a cable assembly **8** includes a multi-conductor electrical cable **10** having a flexible tubular jacket **12** of thermoplastic material such as a PVC plastic having a wall thickness **13**. Attached to the cable 10 near one end of the jacket 12 is a tapered flexible strain-relief boot **14** preferably of a similar flexible plastic metal. The boot 14 fits snugly about the cable 10, and the jacket 12 extends within the boot 14 toward its larger, or head, end **16**. At the smaller, or mouth, end **18** of the boot 14 its wall thickness **20** is smaller than its wall thickness **22** nearer the larger end 16, so that the strain-relief boot 14 provides a graduated amount of lateral support to the cable 10, whose individual conductors **24** extend beyond the larger end 16 of the boot 14 to be connected electrically to appropriate contacts of an electrical circuit (not shown). A shield conductor **26**, shown as being of braided wire, surrounds the group of individual conductors 24, which are individually insulated, as by separate thin coatings of suitable dielectric materials such as PTFE. The shield conductor 26 might alternatively be a served, helical wound, foil strip covering the bundle of conductors 24 contained with the jacket 12 as a substantially continuous, overall shield.

The smaller end 18 of the boot 14 is securely connected to the outer surface **28** of the jacket 12 with a tapered seal 30 in the form of a weld joint **30** shaped so that the smaller end 18 of the boot 14 blends smoothly into the outer surface 28 of the cable jacket 12. As a result, the boot 14 is securely connected to the jacket 12 so that the boot 14 can support tensile stress applied to the jacket 12, for example, by moving the cable 10. Additionally, the tight weld 30, particularly at the margin of the smaller end 18, prevents collection of contaminants within the boot 14, between its interior and the exterior surface of the jacket 12, in contrast by comparison with a jacket 12 being sealed from the boot 14 only by 0-rings near the large end of such a boot 14. The weld joint 30 extends completely around the jacket 12 and the smaller end 18 of the boot 14, creating a continuous seal against intrusion of washing solutions and solvents into the interior portions of the cable 10.

A groove **32** is provided in the larger end 16 of the boot 14 to secure the boot 14 in a housing for a circuit to which the cable 10 is electrically connected.

Referring now also to Figures 2 - 5, a welding fixture **38** is intended for use in a conventional RF welder, such as the 4KW RF welder, Model ART4/6000, manufactured by Cosmos Electronic Machine Corporation of Farmingdale, New York. The RF welder **36** supports the welding fixture 38 on a movable table (not shown), and provides RF energy for welding through contact with the top surface **40** of an outer electrode which is split into two portions, an upper portion **42** and a lower portion **44**, each made of a suitably conductive material such as a copper alloy.

Support members **46** and **48**, alongside the lower portion 44 of the outer electrode, are located atop an insulating layer **50**, in turn, supported, by a base **52**. A retainer **54** is attached to the upper portion 42 of the outer electrode and is removable from the support member 46, together with the upper portion 42 of the outer electrode, to provide access to a channel **64** of the appropriate size to receive the cable 10 snugly. The upper and lower portions 42 and 44 of the outer electrode define a receptacle **58** which is slightly larger in diameter than the channel 64, in order to accommodate the thickness of the smaller end 18 of the boot 14. The receptacle 58 is preferably slightly tapered from a larger diameter at its side **60**, facing toward the larger end 16 of the boot 14, to a smaller diameter adjacent the channel 64. The outer electrode also defines a radially inwardly-protruding lip **62** located immediately adjacent the channel 56, to seat closely against the outer surface of the jacket 12 and thus to prevent any of the material of which the boot 14 is made from flowing axially along the jacket 12 when the material of the jacket 12 and boot 14 become fluid during the process of welding the boot 14 to the jacket 12, as will be explained in greater detail presently.

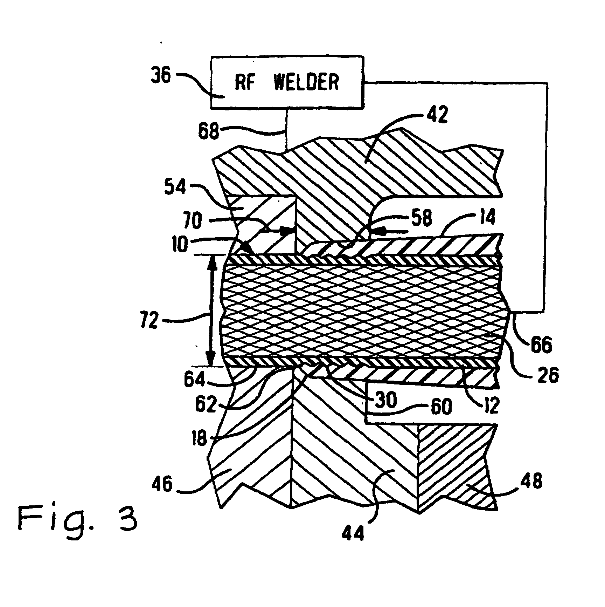

The support member 48 includes a pair of upwardly-protruding blocks defining a channel **65**, Figure 2, between them, to receive the larger end 16 of the boot 14, supporting it so that the cable 10 remains substantially straight as it extends away from the channel 56, through the receptacle 58 and the boot 14. A ground electrode **66** of the RF welder 36 is connected to the shield conductor 26 where it extends beyond the boot 14 with the cable 10 and the boot 14 held in the welding fixture 38 as shown in Figures 2 and 3, and an RF electrode **68** of the RF welder 36 is placed into power transmitting contact with the top 40 of the outer electrode. While RF energy could instead be applied through the shield conductor 26 with the outer electrode connected to ground, the arrangement described has been found to produce superior results.

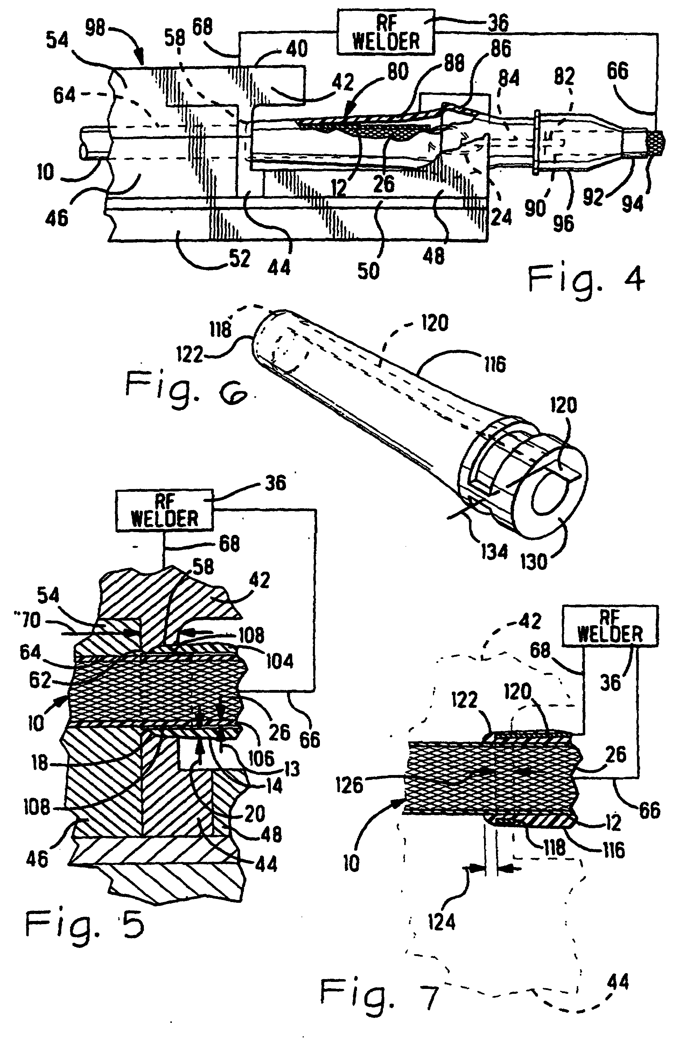

Preferably, the outer electrode has a dimension **70**, measured axially of the cable 10, which is several times as great as the wall thickness 20 adjacent the smaller end 18 of the boot 14, but which is somewhat less than the diameter **72** Figure 3, of the cable 10. The RF energy produced by the RF welder 36 is transmitted substantially radially with respect to the cable 10, between the outer electrode, including both the upper portion 42 and the lower portion 44, which define the receptacle 58, and the shield conductor 26. The heating effect of the RF energy is thus concentrated and confined to the portions of the jacket 12 and the smaller end 18 of the boot 14 are located within the receptacle 58 defined by the outer electrode. When the RF welder 36 is energized at the appropriate power setting and for the appropriate time, the material of the smaller end 18 of the boot 14 and the portion of the jacket 12 immediately surrounded by the receptacle 58 are heated to a high enough temperature to fuse and unite with each other, yet not hot enough to boil, and a strong thermal weld, or heat seal, is formed between the boot 14 and the jacket 12 at that location. For example, for a cable jacket of 60 durometer PVC, with an outside diameter of .350 inch (8.9 mm) and a wall thickness 13, Figure 4, of .030 inch (.76 mm), and a boot 14 of similar material whose wall thickness 20 is .015 inch (0.4 mm), operating the welder 36 at 27.12 Mhz, at an appropriate power setting of, for example, 160 watts (although it is not known how well the RF energy is coupled) for about 7 seconds produces a satisfactory seal. While the receptacle 58 is intended to be of the appropriate size to result in firm mechanical contact between the mouth of the boot and the jacket 12, the jacket may also be inflated to a slight overpressure while the materials are being heated, to ensure a good seal between the boot 14 and the jacket 12.

Referring next to Figure 4, a cable assembly **80** includes a cable 10 having a jacket 12 and a shield conductor 26 which is electrically connected to a card edge connector **82**. The several conductors **24** of the cable are connected to a printed circuit board 84 of which the card edge connector 82 is a part. A hollow housing **86** surrounds the printed circuit board 84 and has attached to it a generally conical flexible strain relief boot portion **88** extending away from the card edge connector **82** along and surrounding a portion of the cable 10 and its jacket 12.

A female connector **90** is connected to a short cable **92** which includes a conductor such as a braided shield conductor **94,** which is connected to a contact, within the female connector 90, that is located so as to mate electrically with a contact of the connector 82 which, in turn, is electrically connected to the shield conductor 26 of the cable 10. A protective housing **96** associated with the female connector 90 and the short cable 92 is of a design which exerts no force on the housing 86 when the female connector 90 is being connected to the card edge 82, so that connection of the connectors 82 and 90 with each other will not disturb the physical location of the conical strain relief boot portion 88 of the housing with respect to the cable 10. The strain relief boot portion 88 of the housing 86 can be welded to the jacket 12 of the cable 10 by connecting the ground electrode 66 of the RF welder 36 to the shield conductor 94, with the female connector 90 mated with the card edge connector 82. The cable assembly 80 is welded using the appropriate welding fixture **98**, which is similar, except for specific dimensions, to the welding fixture 38 previously described.

As shown in Figure 5, in the case of a strain relief boot **104** and a jacket **106,** respectively, made of materials which are not easily thermally welded to one another, a layer **108** of a heat-activated adhesive material may be applied to the appropriate area on the outside surface of the jacket 106 or the interior surfaces of the boot 104. Bostik heat activated adhesive 7119M, a polyurethane solvent adhesive available from Bostik Incorporated, of Middleton, Massachusetts, is a satisfactory adhesive, requiring a temperature of about 175° - 195°F (80° - 90°C) for activation. The cable and boot are placed in the welding fixture 38 as shown previously in Figures 2 and 3, with the layer 108 within the receptacle 58 defined by the upper and lower portions 42, 44 of the outer electrode. The RF welder 36 is then activated at the appropriate power and for the appropriate length of time to heat the heat-activated adhesive of the layer 108, activating the adhesive to form an annular seal 30, and fasten the boot 104 to the jacket 106 securely. Preferably, the temperature of the thermoplastic material of the boot 104 is also raised high enough that it may also be molded within the receptacle 58 to join smoothly with the surface of the jacket to produce a surface which does not present cracks or crevices to collect contaminants on the outside of the cable thus prepared.

A flexible strain-relief boot **116** of a thermoplastic material, shown in Figures 6 and 7, is generally of the same configuration as the boot 14, for example. The boot 116 includes embedded within the thermoplastic material of which it is made an annular electrode **118** from which a long narrow electrode lead **120** extends to the larger end 130 of the boot 116, corresponding to the larger end 16 of the boot 14. The annular electrode 118 is located close to the mouth or smaller end **122** of the boot 116, being separated from it by a distance **124** of, for example, 0.050 inch (1.25 mm). The annular electrode 118 may have an axial length 126 of 0.15 inch (3.8 mm) and may be made of copper foil having a thickness of about 0.01 inch (.25 mm). The lead 120 extends within the material of the boot 116 and protrudes from the large end 130 as a contact for connection to the RF electrode 68 of the RF welder 36, while the ground electrode 66 is connected to the shield conductor 26 of a cable 10 to which the boot 116 is to be attached. Depending upon the materials of the boot 116 and the jacket of a cable 10 to which the boot 116 is being attached, the RF welder can be energized to weld the smaller end 122 of the boot 116 to the jacket of the cable, or to activate a layer of heat-activated adhesive (not shown) as described above in connection with Figure 5. Once the RF welder has been operated for the appropriate length of time to form the interconnection between the boot 116 and the jacket of the cable on which the boot 116 is fastened, the electrode lead 120 can be clipped close to the large end 130, as indicated by a broken line 134 in Figure 6.

An advantage of the invention resides in using a conducting shield of an electrical cable to provide a welding electrode for use in generating an RF field to form a seal between the cable and a strain relief boot.

## Claims

1. An electrical cable assembly (8, 80) for making an electrical cable comprising a plastic jacket (12, 106) concentrically surrounding a hollow shield conductor (26), at least one insulated conductor (24) inside the hollow shield conductor (26), and a plastic boot (14, 88, 104, 116) concentrically surrounding the jacket (12), **characterised by**:
a seal (30) concentrically joining the jacket (12, 106) and a first end (18, 122) of the boot (14, 88, 104, 116) and an electrically conducting welding electrode (66) on the hollow shield conductor (26) protruding beyond a second end (16, 130) of the boot (14, 88, 104, 116) for use in formation of the seal (30).

2. An electrical cable assembly (8) as recited in claim 1 wherein the welding electrode comprises a portion of the shield conductor (26) itself projecting beyond the second end (16) of the boot (14, 116).

3. An electrical cable assembly (80) as recited in claim 1 wherein the welding electrode comprises another shield conductor (94) connected by an electrical connector (82, 90) to the hollow shield conductor (26).

4. An electrical cable assembly as recited in claim 1 wherein a portion (118) of another welding electrode (120) concentrically surrounds the seal (30), and another portion of said another welding electrode (120) extends beyond the first end (130) of the boot (116) for use in formation of the seal (30).

5. A method of sealing between a boot (14, 88, 104, 116) and a jacket (12) on an electrical cable that extends concentrically through the boot (14, 88, 104, 116) comprising the steps of generating an RF field between a first welding electrode (68) and a second welding electrode (66) on a hollow shield conductor (26) of the electrical cable (10), and forming an annular seal (30) between the boot (14, 88, 104, 116) and the jacket (12) by generating the RF field.

## Patentansprüche

1. Anordnung (8, 80) für ein elektrisches Kabel zur Herstellung eines elektrischen Kabels mit einem einen hohlen Schirmleiter (26) konzentrisch umgebenden Kunststoffmantel (12, 106), mindestens einem isolierten Leiter (24) im hohlen Schirmleiter (26) und einer den Mantel (12) konzentrisch umgebenden Kunststoffmuffe (14, 88, 104, 116), **gekennzeichnet durch**:
eine den Mantel (12, 106) und ein erstes Ende (18, 122) der Muffe (14, 88, 104, 116) konzentrisch verbindende Dichtung (30) und eine über ein zweites Ende (16, 130) der Muffe (14, 88, 104, 116) hinwegragende elektrisch leitende Schweißelektrode (66) am hohlen Schirmleiter (26), zur Verwendung bei der Bildung der Dichtung (30).

2. Anordnung (8) für ein elektrisches Kabel nach Anspruch 1, bei der die Schweißelektrode einen Teil des Schirmleiters (26) selbst umfaßt, der über das zweite Ende (16) der Muffe (14, 116) hinausragt.

3. Anordnung (80) für ein elektrisches Kabel nach Anspruch 1, bei der die Schweißelektrode einen anderen Schirmleiter (94) umfaßt, der mittels eines elektrischen Verbinders (82, 90) mit dem hohlen Schirmleiter (26) verbunden ist.

4. Anordnung für ein elektrisches Kabel nach Anspruch 1, bei der ein Teil (118) einer anderen Schweißelektrode (120) die Dichtung (30) konzentrisch umgibt und sich ein anderer Teil der anderen Schweißelektrode (120) zur Verwendung bei der Bildung der Dichtung (30) über das erste Ende (130) der Muffe (116) hinaus erstreckt.

5. Verfahren zur Abdichtung zwischen einer Muffe (14, 88, 104, 116) und einem Mantel (12) an einem sich konzentrisch durch die Muffe (14, 88, 104, 116) erstreckenden elektrischen Kabel, bei dem man zwischen einer ersten Schweißelektrode (68) und einer zweiten Schweißelektrode (66) an einem hohlen Schirmleiter (26) des elektrischen Kabels (10) ein HF-Feld erzeugt und durch Erzeugung des HF-Felds zwischen der Muffe (14, 88, 104, 116) und dem Mantel (12) eine ringförmige Dichtung (30) bildet.

## Revendications

1. Ensemble de câble électrique (8, 80) destiné à la fabrication d'un câble électrique comprenant une gaine en plastique (12, 106) entourant de manière concentrique un conducteur de protection creux (26), au moins un conducteur isolé (24) à l'intérieur du conducteur de protection creux (26), et un manchon en plastique (14, 88, 104, 116) entourant de manière concentrique la gaine (12), **caractérisé par** :
un joint de soudure (30) qui assemble de manière concentrique la gaine (12, 106) et une première extrémité (18, 122) du manchon (14, 88, 104, 116) et une électrode de soudure (66) à conductivité électrique sur le conducteur de protection creux (26) qui dépasse d'une deuxième extrémité (16, 130) du manchon (14, 88, 104, 116) devant être utilisé dans la formation du joint de soudure (30).

2. Ensemble de câble électrique (8) selon la revendication 1, dans lequel l'électrode de soudure comprend une portion du conducteur de protection (26) dépassant elle-même de la deuxième extrémité (16) du manchon (14, 116).

3. Ensemble de câble électrique (80) selon la revendication 1, dans lequel l'électrode de soudure comprend un autre conducteur de protection (94) connecté par un connecteur électrique (82, 90) au conducteur de protection creux (26).

4. Ensemble de câble électrique selon la revendication 1, dans lequel une portion (118) d'une autre électrode de soudure (120) entoure de manière concentrique le joint de soudure (30), et une autre portion de ladite autre électrode de soudure (120) s'étend au-delà de la première extrémité (130) du manchon (116) devant être utilisé dans la formation du joint de soudure (30).

5. Procédé de fabrication d'une soudure entre un manchon (14, 88, 104, 116) et une gaine (12) sur un câble électrique qui s'étend de manière concentrique à travers le manchon (14, 88, 104, 116), comprenant les étapes consistant à générer un champ RF entre une première électrode de soudure (68) et une deuxième électrode de soudure (66) sur un conducteur de protection creux (26) du câble électrique (10), et à former un joint de soudure annulaire (30) entre le manchon (14, 88, 104, 116) et la gaine (12) en générant le champ RF.
